# EUROPEAN PATENT APPLICATION

(11) **EP 2 846 246 A1**
(43) Date of publication of application: **11.03.2015**
(21) Application number: 14170736.4
(22) Date of filing: 02.06.2014
(51) Int. Cl.: G06F 3/0488, G06F 17/30, G06F 3/0481

(54) **A method, an electronic device, and a computer program product for displaying content**

(30) Priority: 06.09.2013 JP 2013185693
(71) Applicant: Kabushiki Kaisha Toshiba, Tokyo 105-8001 (JP)
(72) Inventor: Saiki, Kohji, Tokyo, 105-8001 (JP); Irimoto, Yuuji, Tokyo, 105-8001 (JP); Suzuki, Takako, Tokyo, 105-8001 (JP); Hirakawa, Daisuke, Tokyo, 105-8001 (JP)
(74) Representative: Henkel, Breuer & Partner

(57) **Abstract**

According to one embodiment, a method includes: detecting at least one contact point on a display screen (110); and displaying, if a change in a position of a first contact point on the display screen is detected while first content (601) is displayed on the display screen, second content (711, 712) related to the first content based on a first standard, and displaying, if changes in positions of at least two second contact points on the display screen is detected while the first content is displayed on the display screen, third content (1011, 1012, 1013, 1014) related to the first content based on a second standard, a number of the first contact point differing from a number of the second contact point.

## Description

### FIELD

Embodiments described herein relate generally to a method, an electronic device, and a computer program product for displaying content.

### BACKGROUND

Conventionally, there has been developed various electronic devices such as a tablet computer and a personal computer (PC). The electronic devices can display image data acquired by a camera module mounted therein, image data acquired from an external device, and image data stored in a server connected thereto via a network.

However, according to the conventional technique, a user needs to perform operation for retrieving and displaying desired content from a large number of pieces of image data to find the desired content. When a device holds a large number of pieces of content to be retrieved, the user himself/herself cannot grasp the entire content, so that it becomes difficult to display the content held by the device.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.
FIG. 1 is an exemplary perspective view illustrating an example of an external appearance of a tablet computer according to a first embodiment;
FIG. 2 is an exemplary diagram illustrating a system configuration example in the first embodiment;
FIG. 3 is an exemplary diagram illustrating a system configuration example of the tablet computer in the first embodiment;
FIG. 4 is an exemplary diagram illustrating a software configuration implemented by the tablet computer in the first embodiment;
FIG. 5 is an exemplary diagram illustrating an example of a table structure of an image data management module in the first embodiment;
FIG. 6 is an exemplary diagram illustrating an example of a screen displayed by a full-screen display controller in the first embodiment;
Fig. 7 is an exemplary diagram illustrating a first example of related image data displayed by a related-image display controller in the first embodiment;
FIG. 8 is an exemplary diagram illustrating a second example of the related image data displayed by the related-image display controller in the first embodiment;
FIG. 9 is an exemplary diagram illustrating a plurality of examples of tracks of movements of a finger on a touch screen display, in the embodiment;
FIG. 10 is an exemplary diagram illustrating a third example of the related image data displayed by the related-image display controller in the first embodiment;
FIG. 11 is an exemplary diagram illustrating an example in which the number of contact points is associated with a display standard of related image data, in the embodiment;
FIG. 12 is an exemplary diagram illustrating a difference in the number of pieces of related image data that are displayed corresponding to the number of contact points, in the embodiment;
FIG. 13 is an exemplary diagram illustrating a range of photographing date and time of related image data that is displayed corresponding to the number of contact points, according to a modification;
FIG. 14 is an exemplary diagram illustrating a fourth example of the related image data displayed by the related-image display controller in the first embodiment;
FIG. 15 is an exemplary diagram illustrating a fifth example of the related image data displayed by the related-image display controller in the first embodiment;
FIG. 16 is an exemplary diagram illustrating a sixth example of the related image data displayed by the related-image display controller in the first embodiment;
FIG. 17 is an exemplary diagram illustrating an example of screen transition of the tablet computer in the first embodiment;
FIG. 18 is an exemplary flowchart illustrating a processing procedure from full-screen display of image data to the display of the related image data in the tablet computer in the first embodiment;
FIG. 19 is an exemplary flowchart illustrating a processing from list-screen display to the display of the related image data in the tablet computer in the first embodiment; and
FIG. 20 is an exemplary diagram illustrating an example of displaying the related image data by combining a distance from a current position and an imaging direction of the camera module in the tablet computer according to a second embodiment.

### DETAILED DESCRIPTION

In general, according to one embodiment, a method comprises: detecting at least one contact point on a display screen; and displaying, if a change in a position of a first contact point on the display screen is detected while first content is displayed on the display screen, second content related to the first content based on a first standard, and displaying, if changes in positions of at least two second contact points on the display screen is detected while the first content is displayed on the display screen, third content related to the first content based on a second standard, a number of the first contact point differing from a number of the second contact points.

Hereinafter, the following describes embodiments related to a method, an electronic device, and a computer program with reference to drawings.

### FIRST EMBODIMENT

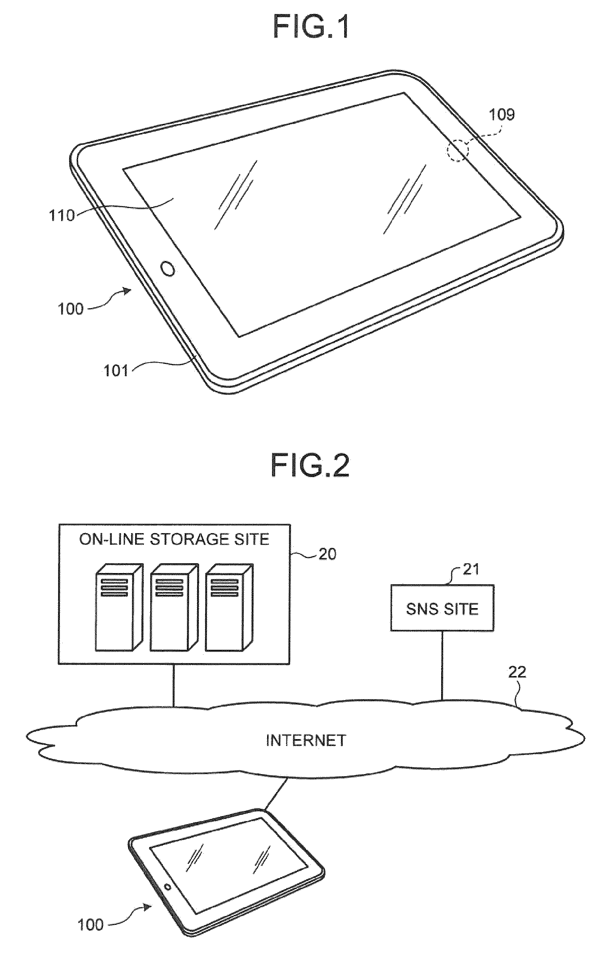

FIG. 1 is a perspective view illustrating an example of an external appearance of a tablet computer according to a first embodiment. The embodiment illustrated in FIG. 1 describes an example of using the tablet computer as an electronic device. In the present embodiment, the electronic device is not limited to the tablet computer. Alternatively, a tablet computer, a cellular phone terminal, a personal digital assistant (PDA), a notebook-type personal computer, or the like may be used as the electronic device. As illustrated in FIG. 1, a tablet computer 100 comprises a main body 101, a touch screen display 110, and a camera module 109.

The main body 101 has a thin rectangular parallelepiped box-shape. The touch screen display 110 is fitted into one surface of the main body 101. The touch screen display 110 is configured such that a touch panel is attached to a liquid crystal display device (LCD), for example. The LCD displays characters, images, and the like on a screen. The touch panel receives an operation by a user by detecting a contact position of a pen or a finger on a screen displayed by the LCD. In the embodiment, the display module is not limited to the LCD. The display module is any device that can display characters, images, and the like. Any type of panel such as a capacitance touch panel can be used as the touch panel.

The camera module 109 is provided to image surroundings of the tablet computer 100 from a face (back face) of the main body 101 opposite the face on which the touch screen display 110 is provided.

FIG. 2 is a diagram illustrating a system configuration example in the first embodiment. With reference to FIG. 2, the system configuration of the embodiment will be described. The tablet computer 100 is connected to an on-line storage site 20 and a social networking service (SNS) site 21 via the Internet 22.

The tablet computer 100 can transmit and receive content to and from the on-line storage site 20. The tablet computer 100 can upload the content to the SNS site 21. The tablet computer 100 enables transmission and reception of comments and the like with respect to the content posted to the SNS site 21. The tablet computer 100 enables browsing, retrieval, and the like of the content held in the on-line storage site 20 and the SNS site 21, similarly to the content held in the tablet computer 100.

In the embodiment, the following describes an example in which image data acquired by the camera module 109 and the like is used as the content. However, the content is not limited to the image data. Alternatively, the content may be moving image data, music data, and the like.

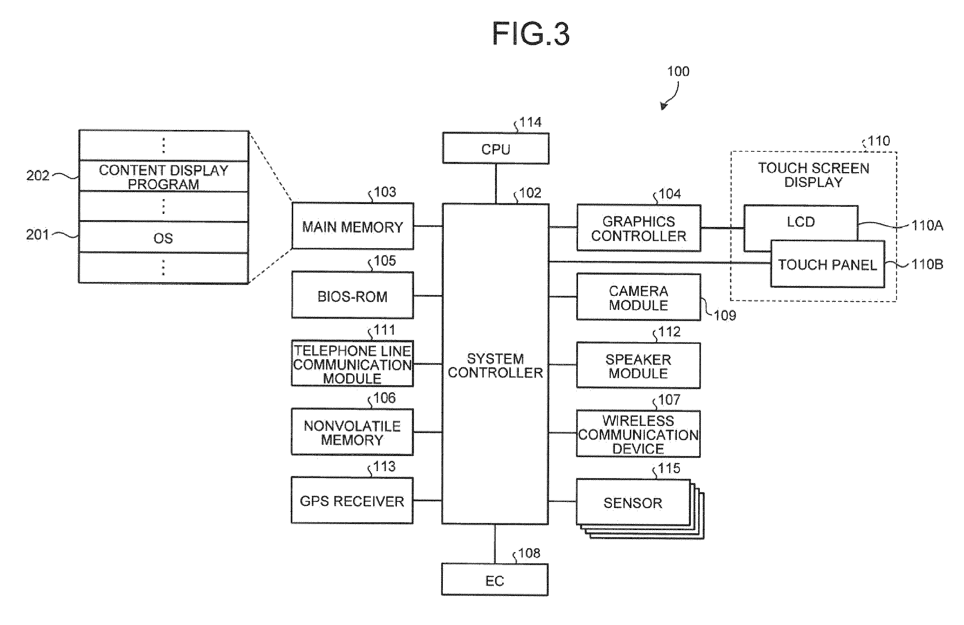

FIG. 3 is a diagram illustrating a system configuration example of the tablet computer 100. As illustrated in FIG. 3, the tablet computer 100 comprises a central processing unit (CPU) 114, a system controller 102, a main memory 103, a graphics controller 104, a basic input/output system read only memory (BIOS-ROM) 105, a nonvolatile memory 106, a wireless communication device 107, an embedded controller (EC) 108, the camera module 109, a telephone line communication module 111, a speaker module 112, a global positioning system (GPS) receiver 113, and a sensor 115.

The CPU 114 is a processor that controls operations of various modules in the tablet computer 100. First, the CPU 114 executes a basic input/output system (BIOS) stored in the BIOS-ROM 105.

Thereafter, the CPU 114 executes various programs loaded onto the main memory 103 from the nonvolatile memory 106 as a storage device. The program to be executed includes an operating system (OS) 201 and various application programs. The application programs include a content display program 202, for example.

The content display program 202 comprises a function for displaying image data. The content display program 202, for example, comprises a function for managing image data photographed by using the camera module 109, image data stored in the nonvolatile memory 106, image data stored in an external storage medium, in the on-line storage site 20, or in the SNS site 21, and the like. The content display program 202 also comprises a function for sharing image data to be managed with other users. The content display program 202 comprises a user interface (UI) for presenting image data unexpectable to the user, in addition to the UI used by the user to easily retrieve image data.

The system controller 102 is a device that connects a local bus of the CPU 114 with various components. The system controller 102 incorporates a memory controller that performs access control for the main memory 103. The system controller 102 comprises a function for communicating with the graphics controller 104 via a serial bus of the peripheral component interconnect (PCI) EXPRESS standard and the like.

The graphics controller 104 is a display controller that controls an LCD 110A used as a display monitor of the tablet computer 100. A display signal generated by the graphics controller 104 is transmitted to the LCD 110A. The LCD 110A displays screen data based on the display signal. A touch panel 110B is arranged on the LCD 110A.

The wireless communication device 107 is a device configured to execute wireless communication via a wireless local area network (LAN), Bluetooth (registered trademark), or the like. The EC 108 is a one-chip microcomputer including an embedded controller for managing a power supply. The EC 108 comprises a function for turning on or off the power supply of the tablet computer 100 in accordance with an operation of a power button by a user.

The camera module 109, for example, photographs an image in response to the user touching (tapping) a button (graphical object) displayed on a screen of the touch screen display 110. The speaker module 112 outputs a voice based on a voice signal.

The telephone line communication module 111 is a module for performing data communication including the voice data via a base station that relays a network provided as a mobile communication system such as 3G, for example.

The GPS receiver 113 receives positional information of the tablet computer 100 measured with a GPS.

The sensor 115 may be a sensor that can detect a direction and the like of the tablet computer 100. The sensor 115 is a compass, for example. The compass can detect an azimuth (east, west, south, north, and the like) in which the tablet computer 100 is directed, and a change in a position thereof.

The following term "date and time" means year and month, date, time, day of the week, and the like unless specifically limited. The date and time of the content represent the date and time when the content is created. When the content is image data, the date and time when the content is created correspond to the date and time when the image is photographed.

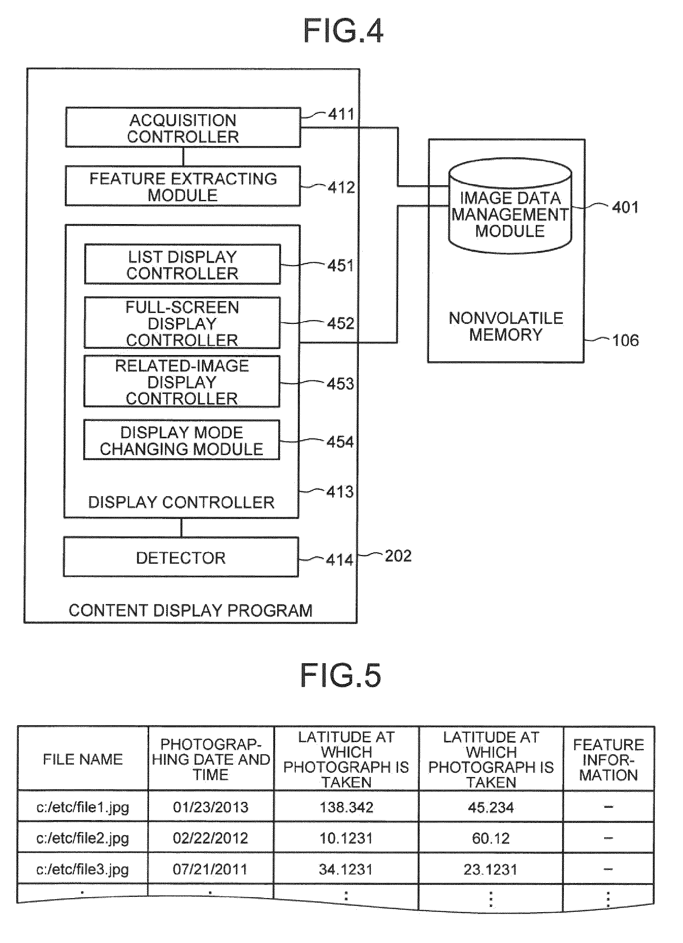

FIG. 4 is a diagram illustrating a software configuration implemented by the tablet computer 100 in the embodiment. The tablet computer 100 may implement the configuration illustrated in FIG. 4 by the CPU 114 executing the content display program 202.

As illustrated in FIG. 4, the content display program 202 comprises an acquisition controller 411, a feature extracting module 412, a display controller 413, and a detector 414. Each component included in the content display program 202 refers to an image data management module 401 stored in the nonvolatile memory 106.

The content display program 202 in the embodiment displays, to the user, the image data managed by the image data management module 401 stored in the nonvolatile memory 106. Image data to be managed by the image data management module 401 is the image data held in the on-line storage site 20 or the SNS site 21, in addition to the image data in the nonvolatile memory 106.

Fig. 5 is a diagram illustrating an example of a table structure of the image data management module 401. As illustrated in FIG. 5, the image data management module 401 stores a file name, date and time, latitude, longitude, and feature information in a manner associated with one another. The latitude and the longitude indicate a point at which the image data is photographed. The feature information is information indicating features extracted from the image data.

Returning to FIG. 4, the acquisition controller 411 acquires latitude and longitude representing a point at which the image data is photographed, and date and time when the image data is photographed, in addition to the image data photographed by the camera module 109. The acquisition controller 411 outputs the acquired image data to the feature extracting module 412. The acquisition controller 411 receives the feature information extracted by the feature extracting module 412 and the image data, and stores the received image data, the latitude, the longitude, the date and time, and the feature information in the image data management module 401.

The feature extracting module 412 extracts the feature information from the input image data. The feature information extracted by the feature extracting module 412 is information used to identify a face, a smiling face, or a landscape included in the image data. When the image data includes a subject, a face thereof is detected and a feature amount thereof is obtained. The feature amount means an amount of information such as a position, a size, a degree of smile, visibility, and a face angle to the front. As described above, the feature extracting module 412 performs face detection and calculation of feature amounts (face recognition) on the entire image data managed by the image data management module 401, and extracts information used to cluster pieces of image data in which faces having similar features are imaged as one group. Accordingly, when list display is performed, a list of image data in which a certain person is imaged can be displayed. In a technology for extracting a landscape (scene) from a photograph, a principal subject other than the face is recognized from the subject in the photograph (scene recognition). By combining the recognized scene and the extracted feature amount of the face, a list of image data classified by scenes can be displayed. Examples of the scene that can be recognized include a landscape, a flower, a building, a dish, and a vehicle. By combining the scene recognition and the face recognition, a family photograph or a group photograph may also be recognized. The feature extracting module 412 can extract, as the feature information, information indicating whether the landscape includes the sea, colored leaves of autumn, snow, a city, a Japanese house, a night scene, a road, and the like, from the features of the landscape.

The detector 414 detects at least one contact point on the touch screen display 110 via the touch panel 110B. The touch panel 110B according to the embodiment is a multi-touch compatible panel. Accordingly, the detector 414 detects contact points corresponding to the number of fingers making contact with the touch screen display 110. The tablet computer 100 of the embodiment enables simultaneous operations on the touch screen display 110 with a plurality of fingers, and performs different processing and display depending on the number of fingers.

The display controller 413 performs control for displaying information on the touch screen display 110. The display controller 413 according to the embodiment comprises a list display controller 451, a full-screen display controller 452, a related-image display controller 453, and a display mode changing module 454.

The list display controller 451 displays a list of image data managed by the image data management module 401. As a method of list display, it may be considered that a list of pieces of image data is displayed in a manner classified by date and time or photographing points.

The full-screen display controller 452 performs full-screen display by adapting the image data managed by the image data management module 401 to a display region of the touch screen display 110. In a case in which the detector 414 detects selection of a certain piece of image data when the list display controller 451 displays the list of image data, for example, the full-screen display controller 452 performs full-screen display of the certain piece of image data.

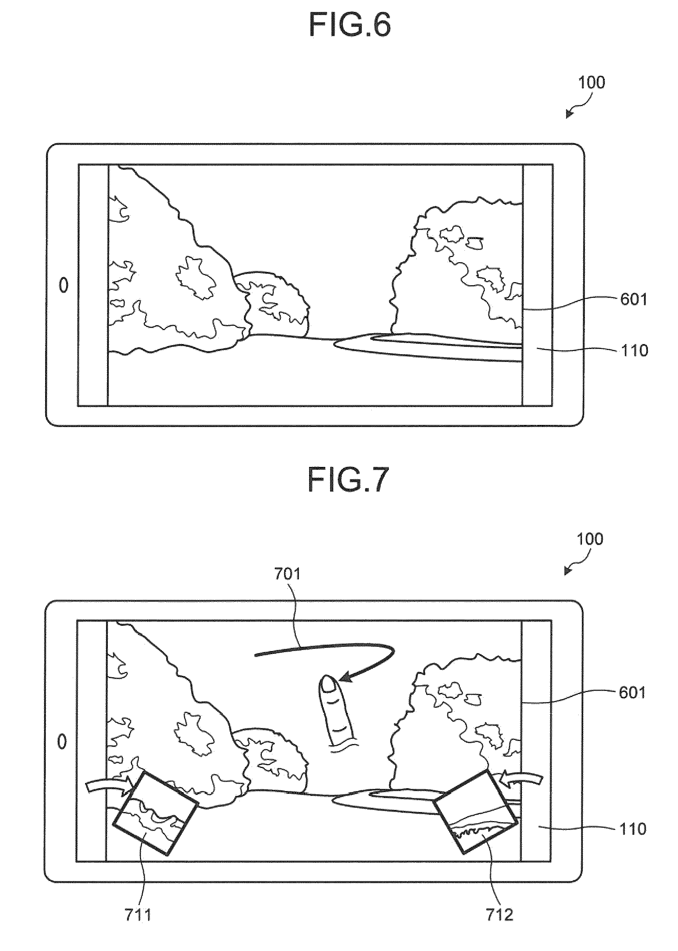

FIG. 6 is a diagram illustrating an example of a screen displayed by the full-screen display controller 452. As illustrated in FIG. 6, image data 601 is full-screen displayed on the touch screen display 110. The tablet computer 100 in the embodiment may display related image data when the full-screen display is performed.

In a case in which the detector 414 detects a change in a position of the contact point with respect to the touch screen display 110 while the image data is displayed on the touch screen display 110, the related-image display controller 453 displays image data related to the image data that is currently being displayed (hereinafter, referred to as related image data) based on a preset standard.

FIG. 7 is a diagram illustrating a first example of the related image data displayed by the related-image display controller 453. As illustrated in FIG. 7, in a case in which the detector 414 detects a change in position 701 of the contact point after detecting a finger of a user as the contact point, the related-image display controller 453 performs display control of pieces of related image data 711 and 712 related to the image data 601 that is currently displayed. The related-image display controller 453 performs animation display such that the pieces of related image data 711 and 712 are moved to preset positions on the touch screen display 110.

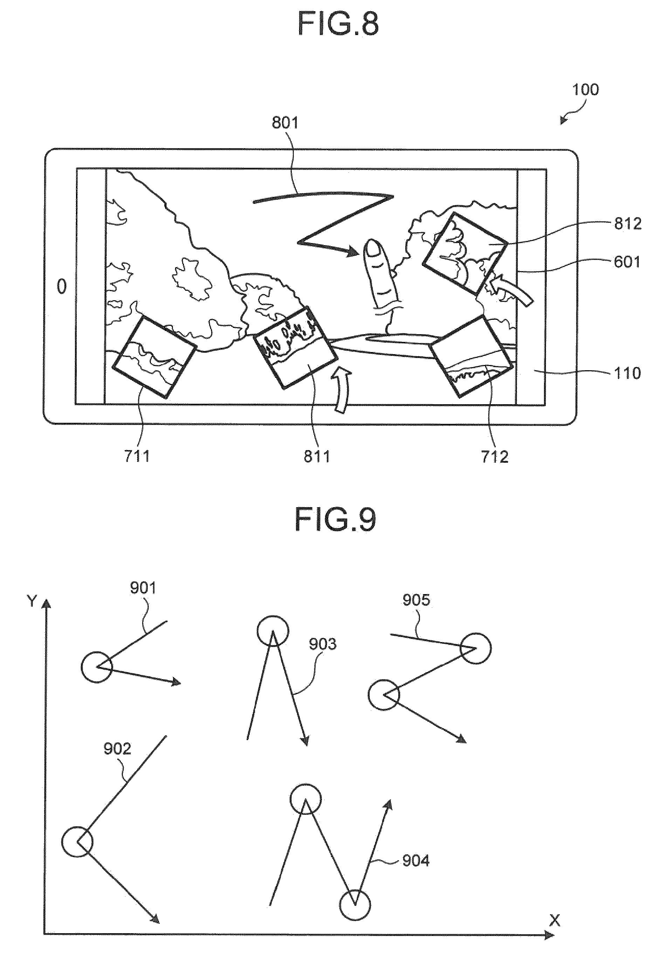

In the embodiment, the related image data is added corresponding to the change in position of the contact point detected by the detector 414. FIG. 8 is a diagram illustrating a second example of the related image data displayed by the related-image display controller 453. As illustrated in FIG. 8, if the detector 414 detects additional change in position 801 of the contact point after the display control of FIG. 7 is performed, the related-image display controller 453 performs display control for adding pieces of related image data 811 and 812 related to the image data 601 that is currently being displayed.

As described above, in the embodiment, related image data is additionally displayed every time the detector 414 detects the change in position of the contact point. In the embodiment, reverse of the moving direction is detected in an X-axis direction or a Y-axis direction on the touch screen display 110, as the change in position of the contact point. When the reverse of the moving direction is detected, the display control of the related image data is performed. FIG. 9 is a diagram illustrating the change in position of the contact point detected by the detector 414. FIG. 9 illustrates a plurality of examples of tracks of movements of a finger on the touch screen display 110. In the example of FIG. 9, each reverse of the moving direction in the X-axis direction or the Y-axis direction is indicated by an area enclosed by a circle.

On a track of movement 901, for example, the related-image display controller 453 adds the related image data at a point where the moving direction is reversed in the X-axis direction. An angle at which the moving direction is reversed is not specifically limited. The related-image display controller 453 adds the related image data even when the moving direction is reversed at an angle of 90 degrees or more like a track of movement 902.

The reverse direction is not limited to the moving direction in the X-axis direction. The related-image display controller 453 adds the related image data even when the moving direction is reversed in the Y-axis direction like a track of movement 903.

In the embodiment, the related image data is additionally displayed every time the track of movement is reversed. In a case of tracks of movement 904 and 905, for example, the related-image display controller 453 adds twice the related image data to be displayed.

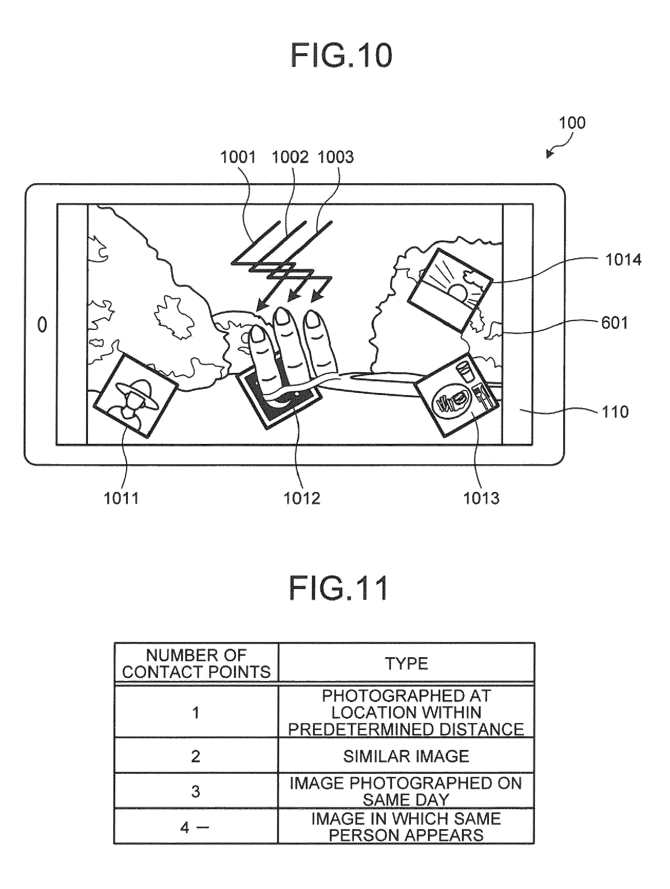

The tablet computer 100 according to the embodiment additionally displays the related image data based on different standards corresponding to the number of contact points. FIG. 10 is a diagram illustrating a third example of the related image data displayed by the related-image display controller 453. In an example illustrated in FIG. 10, changes in positions 1001, 1002, and 1003 are detected for three contact points. In this case, displayed are pieces of related image data 1011, 1012, 1013, and 1014 different from the pieces of related image data 711, 712, 811, and 812 illustrated in the screen example of FIG. 8. As illustrated in FIG. 10, the changes in positions 1001, 1002, and 1003 to be detected are assumed to be of fingers of one hand. This means it is required that tracks of movements of a plurality of contact points, which are detected by the detector 414, have shapes corresponding to each other.

Next, the following describes a display standard of the related image data corresponding to the number of contact points in the embodiment. FIG. 11 is a diagram illustrating an example in which the number of contact points is associated with the display standard of the related image data. As illustrated in FIG. 11 in a case in which the number of contact points is "1", in other words, a user touches the touch screen display 110 with one finger and moves the finger vertically or horizontally, the image data displayed on the touch screen display 110 and image data photographed at a point within a predetermined distance are displayed as the related image data. When the user touches the device with two fingers and moves the fingers vertically or horizontally, similar image data is displayed as the related image data. When the user touches the device with three fingers and moves the fingers vertically or horizontally, an image photographed on the same day is displayed as similar image data. When the user touches the device with four fingers and moves the fingers vertically or horizontally, an image in which a person (subject) determined to be the same person is acquired is displayed as similar image data. In this way, in the embodiment, the related image data to be displayed will change depending on the number of fingers of the user. Many variations can be considered in the display standards of the related image data depending on the number of contact points.

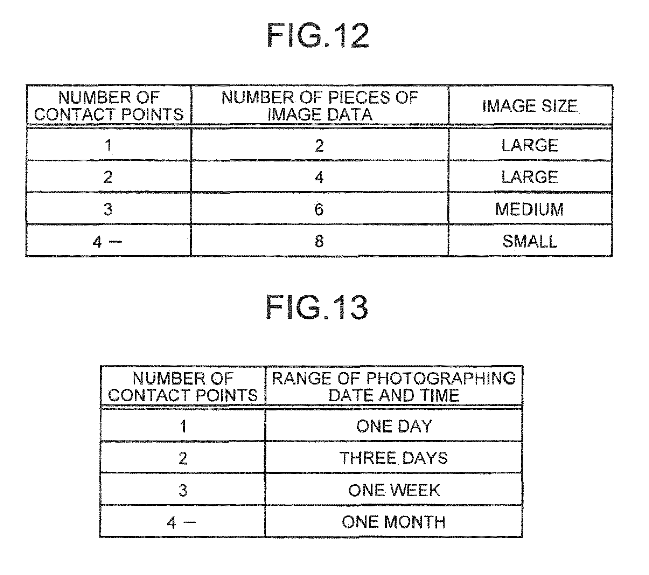

For example, the number of pieces of related image data to be displayed may be different depending on the number of contact points. FIG. 12 is a diagram illustrating a difference in the number of pieces of related image data that are displayed corresponding to the number of contact points. In the example illustrated in FIG. 12, when the change in position of the contact point is detected, the number of pieces of related image data (for example, "2", "4", "6", and "8") displayed when the change in position is detected is increased corresponding to the number of contact points (for example, "1", "2", "3", and "4 or more"). With the increase in the number of pieces of related image data (for example, "2", "4", "6", and "8"), the display mode changing module 454 changes an image size (for example, "large", "large", "medium", and "small") of the related image data to be displayed. Accordingly, when the number of pieces of related image data to be displayed is increased, the image size of the related image data to be displayed on the touch screen display 110 is reduced. Accordingly, the displayed related image data may be prevented from being superimposed on the other piece of related image data and being invisible. The user can set whether to change the number of pieces of related image data depending on the number of contact points.

As described above, the display mode changing module 454 changes the display mode of image data such as the related image data according to the operation by the user and the like.

Unlike in the tablet computer 100 according to the embodiment, a range of photographing date and time of the related image data to be displayed may be changed depending on the number of contact points. FIG. 13 is a diagram illustrating the range of photographing date and time of the related image data that is displayed corresponding to the number of contact points according to a modification. In the example illustrated in FIG. 13, when one contact point is detected, the related-image display controller 453 displays, as the related image data, the image data that is full-screen displayed on the touch screen display 110 and image data photographed on the same day as that of the former image data. When two contact points are detected, the related-image display controller 453 displays, as the related image data, image data photographed three days before and after the day on which the image data that is full-screen displayed on the touch screen display 110 is photographed. When three contact points are detected, the related-image display controller 453 displays, as the related image data, image data photographed a week before and after the day on which the image data that is full-screen displayed on the touch screen display 110 is photographed. When four or more contact points are detected, the related-image display controller 453 displays, as the related image data, image data photographed a month before and after the day on which the image data that is full-screen displayed on the touch screen display 110 is photographed.

Unlike in the tablet computer 100 according to the embodiment, a retrieval range of points where images are photographed may be changed depending on the number of detected contact points. For example, it may be considered that image data to be displayed is searched within a broader range as the number of the contact points increases.

In other words, the standard corresponding to the number of contact points determines at least any of a temporal relation between creation time of the displayed image data (content) and creation time of the related image data (content), a geographical relation between a creation point of the displayed image data (content) and a creation point of the related image data (content), and a relation between the subject of the displayed image data (content) and the subject of the related image data (content).

Unlike in the tablet computer 100 according to the embodiment, an animation mode or animation speed in displaying the related image data may be changed depending on the number of contact points. Metadata (attribute) of the image data, a type of the subject, a file size, resolution, an upload destination, an acquisition source of the image data, and the like maybe changed depending on the number of contact points.

As described above, when the image data is displayed on the touch screen display 110, the related-image display controller 453 displays the related image data related to the displayed image data based on a predetermined standard in a case in which the reverse of the moving direction of one contact point is detected on the touch screen display 110, and displays the related image data related to the displayed image data based on a standard different from the predetermined standard in a case in which the reverse of the moving direction of two or more contact points is detected on the touch screen display 110.

The tablet computer 100 according to the embodiment does not limit display control of the related image data when the full-screen display controller 452 displays the image data. The display control of the related image data may be performed when the list display controller 451 displays the list of the image data.

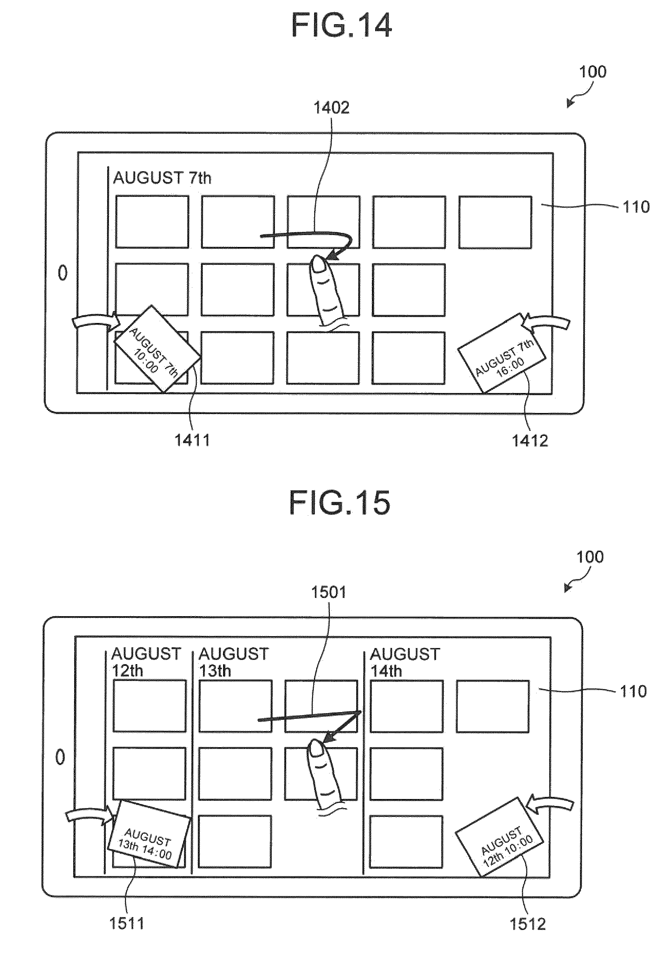

FIG. 14 is a diagram illustrating a fourth example of the related image data displayed by the related-image display controller 453. In the screen example illustrated in FIG. 14, the related image data is displayed while the list display controller 451 displays the list of image data photographed on August 7th. When the detector 414 detects a change in position (reverse of the moving direction) 1402 of the contact point, for example, the related-image display controller 453 displays pieces of related image data 1411 and 1412 related to an image list that is currently displayed. In the example illustrated in FIG. 14, image data photographed on the same day as that of the image data that is displayed as a list is displayed as the related image data.

FIG. 15 is a diagram illustrating a fifth example of the related image data displayed by the related-image display controller 453. In the screen example illustrated in FIG. 15, the related image data is displayed while the list display controller 451 displays the list of image data photographed on August 12th to August 14th. When the detector 414 detects a change in position (reverse of the moving direction) 1501 of the contact point, for example, the related-image display controller 453 displays pieces of related image data 1511 and 1512 related to an image list that is currently displayed. In the example illustrated in FIG. 15, image data photographed on the same date and time (from August 12th to August 14th) as those of the image data that is displayed as a list is displayed as the related image data.

Even when the image data is displayed as a list as described above, a display standard of related image data is changed depending on the number of contact points. In the embodiment, the range of the photographing date and time to be searched is enlarged depending on the number of contact points.

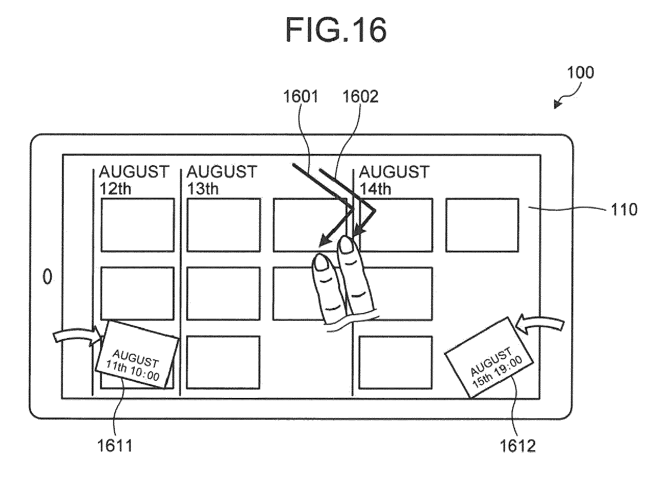

FIG. 16 is a diagram illustrating a sixth example of the related image data displayed by the related-image display controller 453. In the screen example illustrated in FIG. 16, the related image data is displayed while the list display controller 451 displays the list of image data photographed on August 12th to August 14th. When the detector 414 detects changes in positions (reverse of the moving direction) 1601 and 1602 of two contact points, for example, the related-image display controller 453 displays pieces of related image data 1611 and 1612 related to the image list that is currently displayed. In the example illustrated in FIG. 16, image data photographed three days before and after the day on which the image data displayed as a list is photographed is displayed as the related image data. As described above, when there are two contact points, the range of photographing date and time becomes three times broader. When the number of contact points further increases, the range of photographing date and time becomes further broader.

As described above, the tablet computer 100 according to the embodiment changes the standard of the related image data to be displayed depending on the number of contact points irrespective of the displayed screen. The list screen in the display of the related image data is not necessarily classified by date and time, but by photographing points or events.

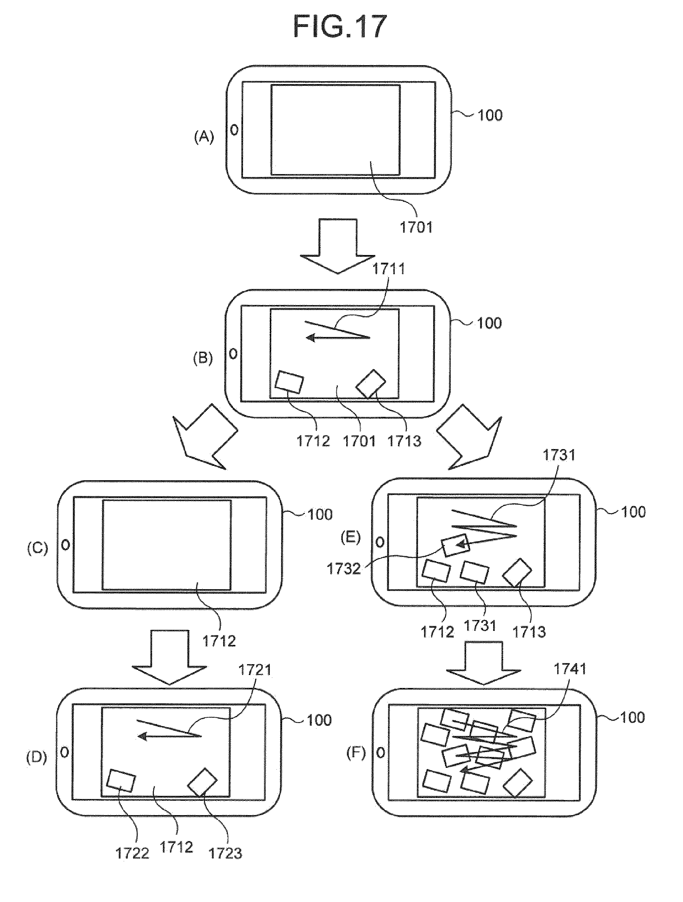

FIG. 17 is a diagram illustrating an example of screen transition of the tablet computer 100 in the embodiment. In the screen example of (A) of FIG. 17, the full-screen display controller 452 is assumed to display image data 1701.

As illustrated in (B) of FIG. 17, when the detector 414 detects reverse of a track of movement 1711 of the contact point, the related-image display controller 453 displays pieces of related image data 1712 and 1713.

As illustrated in (C) of FIG. 17, when the detector 414 detects contact with respect to the related image data 1712, the full-screen display controller 452 full-screen displays the related image data 1712. Thereafter, as illustrated in (D) of FIG. 17, when the detector 414 detects reverse of a track of movement 1721 of the contact point, the related-image display controller 453 displays pieces of related image data 1722 and 1723 related to the related image data 1712.

On the other hand, when the detector 414 further detects reverse of a track of movement 1731 of the contact point after the screen display of (B) of FIG. 17 is performed, as illustrated in (E) of FIG. 17, the related-image display controller 453 displays pieces of related image data 1731 and 1732. Thereafter, as illustrated in (F) of FIG. 17, the related image data to be displayed is sequentially added every time the detector 414 detects reverse of a track of movement 1741 of the contact point.

As described above, because the related image data to be displayed is sequentially added every time the user moves his/her fingers vertically or horizontally, the user can see unexpected image data. To retrieve a piece of image data, the user needs to image the piece of image data to be retrieved for in advance. In other words, in retrieval, the user rarely browses unimaginable image data. In contrast, the tablet computer 100 according to the embodiment can display various pieces of image data with simple operation, so that the user may also see unexpected image data and the like. Accordingly, the tablet computer 100 according to the embodiment may provide enjoyment different from that of a normal UI to the user.

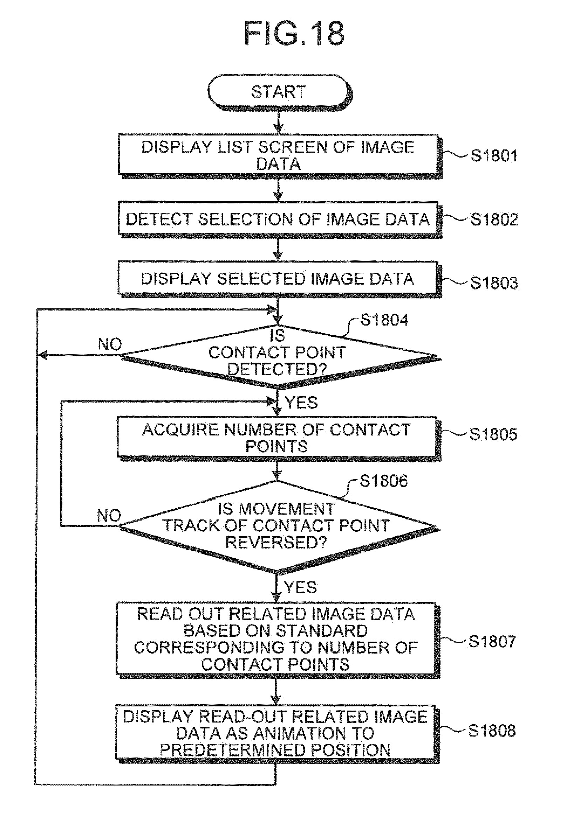

Next, the following describes a processing from the full-screen display of the image data to the display of the related image data in the tablet computer 100 according to the embodiment. FIG. 18 is a flowchart illustrating a processing procedure described above in the tablet computer 100 according to the embodiment.

First, the list display controller 451 of the tablet computer 100 displays a list screen of the image data (S1801). Next, the detector 414 detects selection of a certain piece of image data from the list screen (S1802).

Subsequently, the full-screen display controller 452 full-screen displays the selected piece of image data (S1803). The detector 414 determines whether contact is made with respect to the touch screen display 110, in other words, whether a contact point is detected (S1804). If the contact point is not detected (No at S1804), the process at S1804 is repeated again.

If the detector 414 detects the contact point (Yes at S1804), the detector 414 acquires the number of contact points (S1805). The detector 414 detects whether the track of movement of the contact point is reversed in the X-axis direction or the Y-axis direction (S1806). If the reverse of the moving direction is not detected (No at S1806), the process returns to S1805 again.

If the detector 414 detects the reverse of the moving direction of the contact point in the X-axis direction or the Y-axis direction (Yes at S1806), the related-image display controller 453 reads out the related image data related to the image data that is currently full-screen displayed based on a standard corresponding to the number of contact points (S1807). Then the related-image display controller 453 displays the read-out related image data as an animation to a predetermined position (S1808). Subsequently, the processes are repeated again from S1804.

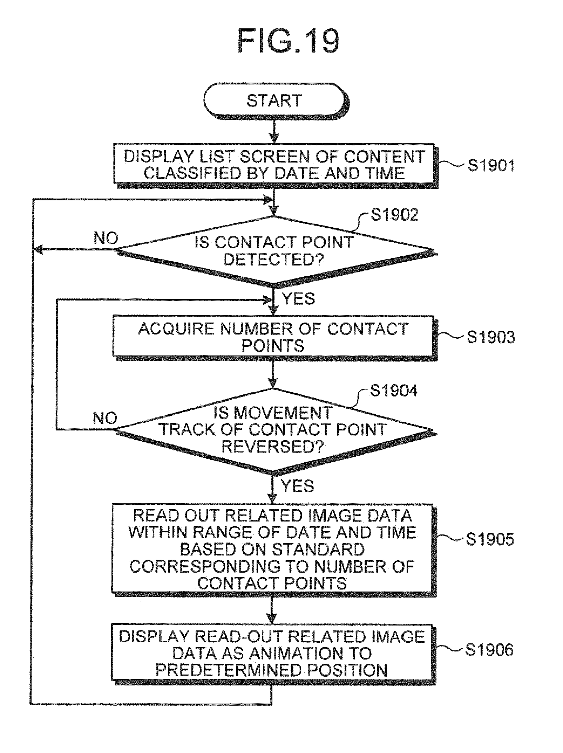

Next, the following describes a processing from the list-screen display to the display of the related image data in the tablet computer 100 according to the embodiment. FIG. 19 is a flowchart illustrating the processing procedure described above in the tablet computer 100 in the embodiment.

First, the list display controller 451 of the tablet computer 100 displays a list screen of image data classified by date and time (S1901). The detector 414 determines whether the contact point is detected on the touch screen display 110 (S1902). If the contact point is not detected (No at S1902), the process at S1902 is repeated again.

If the detector 414 detects the contact point (Yes at S1902), the detector 414 acquires the number of contact points (S1903). The detector 414 further detects whether the track of movement of the contact point is reversed in the X-axis direction or the Y-axis direction (S1904). If the reverse of the moving direction is not detected (No at S1904), the process returns to S1903 again.

If the detector 414 detects the reverse of the moving direction of the contact point in the X-axis direction or the Y-axis direction (Yes at S1904), the related-image display controller 453 reads out the related image data of which date and time is related to those of the image data that is currently displayed as a list based on a standard corresponding to the number of contact points (S1905). Then the related-image display controller 453 displays the read-out related image data as an animation to a predetermined position (S1906). Subsequently, the processes are repeated again from S1902.

According to the processing procedure described above, the related image data can be displayed with a simple operation by the user. By repeating the operation, possibility of seeing unexpected related image data is increased for the user.

### SECOND EMBODIMENT

The above embodiment describes the example in which the related image data is displayed based on the image data displayed on the touch screen display 110. However, the image data required to display the related image data is not limited to the image data that has been already photographed. The second embodiment describes an example in which the related image data is displayed based on image data that is being currently photographed. The configuration of the tablet computer 100 in the second embodiment is the same as that in the first embodiment, so that description thereof will not be repeated here.

In the example of the tablet computer 100 according to the second embodiment, a person, scenery, and a landscape are displayed on the touch screen display 110 via a lens of the camera module 109. The tablet computer 100 in the second embodiment displays the related image data based on the image data that is being currently photographed via the camera module 109.

That is, the acquisition controller 411 acquires the image data that is being photographed by the camera module 109, and the feature extracting module 412 extracts feature information from the acquired image data. Then the full-screen display controller 452 full-screen displays the acquired image data on the touch screen display 110. In such situation, when the detector 414 detects reverse of the moving direction of the contact point on the touch screen display 110, the related-image display controller 453 displays the related image data related to the image data currently being displayed. To display the related image data, the related image data based on current date and time, a position (latitude and longitude), feature information, and the like is read out.

A standard for displaying the related image data may be similar to that in the first embodiment, or may be combined with information detected from the other sensor 115. The embodiment describes an example in which the related image data is displayed by combining a distance from the current position and a detected direction of the tablet computer 100.

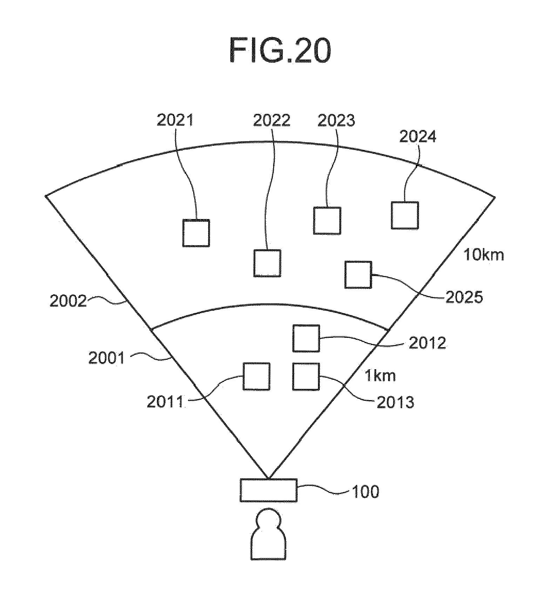

FIG. 20 is a diagram illustrating an example of displaying the related image data by combining the distance from the current position and an imaging direction of the camera module 109. As illustrated in FIG. 20, the sensor 115 detects a photographing direction of the camera module 109 in the tablet computer 100, and the acquisition controller 411 acquires a detection result (photographing direction) provided by the sensor 115. Then the related-image display controller 453 displays the related image data based on the photographing direction acquired by the acquisition controller 411 and the image data being currently displayed. For example, the related-image display controller 453 displays, as the related image data, a piece of image data imaged at a certain point in the photographing direction among image data similar to the image data being currently displayed. At this time, a range from which the related image data is read out is determined corresponding to the number of contact points detected by the detector 414.

When the detector 414 detects one contact point, for example, the related-image display controller 453 displays the related image data out of pieces of image data 2011 to 2013 photographed at a point in the photographing direction (and a photographing field angle) and within a range 2001 that is within 1 km from the current position.

In another example, when the detector 414 detects two contact points, the related-image display controller 453 displays the related image data out of pieces of image data 2011 to 2013 and 2021 to 2025 photographed at a point in the photographing direction (and the photographing field angle) and within ranges 2001 and 2002 that is within 10 km from the current position. As the number of detection points increases, the range from which the related image data is read out becomes broader. When three or more contact points are detected, the range from which the related image data is read out becomes further broader.

As described above, the related-image display controller 453 in the embodiment displays the related image data according to both a first display standard corresponding to a certain contact point and the photographing direction. When change in position of other contact points of which number is different from that of certain detection points is detected, the related-image display controller 453 displays the related image data according to both a second display standard different from the first display standard and the photographing direction.

In the embodiment, described is a case in which the sensor 115 to be combined is a compass. Alternatively, other sensor may be used for displaying the related image data. Even after displaying all pieces of the related image data in a range corresponding to the number of detected contact points, the related-image display controller 453 may further make a retrieval range of the related image data to be displayed broader when the detector 414 detects reverse of the moving direction of the contact point. Accordingly, pieces of related image data may be displayed one after another as long as a user performs operation.

As described above, with the tablet computer 100 in the above embodiment, a user can browse content with a simple operation. The user can also change the standard of the related image data to be displayed depending on the number of fingers making contact with the touch screen display 110, so that the user can display various pieces of related image data with a simple operation. The related image data is displayed every time the reverse of the moving direction is detected, so that a piece of image data that cannot be retrieved because the user has already forgotten may be displayed.

A content display program executed by the tablet computer according to the embodiment is recorded in a computer-readable recording medium such as a compact disc read only memory (CD-ROM), a flexible disk (FD), a compact disc recordable (CD-R), and a digital versatile disk (DVD), as an installable or executable file to be provided.

The content display program executed by the tablet computer according to the embodiment may be configured to be provided by being stored on a computer connected to a network such as the Internet to be downloaded via the network. The content display program executed by the tablet computer according to the embodiment may be configured to be provided or distributed via a network such as the Internet.

The content display program according to the embodiment may be configured to be provided being incorporated in a ROM and the like in advance.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A method comprising:
detecting at least one contact point on a display screen (110); and
displaying, if a change in a position of a first contact point on the display screen (110) is detected while first content (601) is displayed on the display screen (110), second content (711, 712) related to the first content (601) based on a first standard, and displaying, if changes in positions of at least two second contact points on the display screen (110) are detected while the first content is displayed on the display screen, third content (1011, 1012, 1013, 1014) related to the first content (601) based on a second standard, a number of the first contact point differing from a number of the second contact points.

2. The method of Claim 1, wherein
the change in the position of the first contact point and the changes in the positions of the second contact points are detected by reverse of moving directions of the first contact point and the second contact points in a first axial direction on the display screen (110), and
each track of movement of the second contact points has a shape corresponding to each other.

3. The method of Claim 1 or 2, wherein at least one of the first standard and the second standard defines at least one of a temporal relation between creation time of the first content (601) and creation time of the second content or the third content, a geographical relation between a creation point of the first content (601) and a creation point of the second content or the third content, and a relation between a subject of the first content (601) and the subject of a second content or the third content.

4. The method of any one of Claims 1 to 3, further comprising:
acquiring first information detected by a sensor (115); and
displaying the second content in accordance with both the first standard and the first information, and displaying, if the change in the positions of the second points are detected, the third content in accordance with both the second standard and the first information.

5. The method of any one of Claims 1 to 4, further comprising:
displaying, if the change in the first contact point is detected while first image data acquired by an image acquiring module (109) is displayed on the display screen (110), second image data related to first image data based on the first standard, and displaying, if the changes in the positions of the second contact points are detected while the first image data is displayed on the display screen, third image data related to the first image data based on the second standard.

6. An electronic device comprising:
a detector (414) configured to detect at least one contact point on a display screen (110); and
a display controller (413) configured to display, if a change in a position of a first contact point on the display screen (110) is detected while first content (601) is displayed on the display screen (110), second content (711, 712) related to the first content (601) based on a first standard, and to display, if changes in positions of at least two second contact points on the display screen (110) is detected while the first content (601) is displayed on the display screen (110), third content (1011, 1012, 1013, 1014) related to the first content (601) based on a second standard.

7. The electronic device of Claim 6, wherein
the change in the position of the first contact point and the changes in the positions of the second contact points are detected by reverse of moving directions of the first contact point and the second contact points in a first axial direction on the display screen (110), and
each track of movement of the second contact points has a shape corresponding to each other.

8. The electronic device of Claim 6 or 7, wherein at least one of the first standard and the second standard defines at least one of a temporal relation between creation time of the first content (601) and creation time of the second content or the third content, a geographical relation between a creation point of the first content (601) and a creation point of the second content or the third content, and a relation between a subject of the first content (601) and the subject of a second content or the third content.

9. The electronic device of any one of Claims 6 to 8, wherein
the detector (414) is further configured to acquire first information detected by a sensor (115); and
the display module (413) is further configured to display the second content in accordance with both the first standard and the first information, and to display, if the change in the positions of the second points are detected, the third content in accordance with both the second standard and the first information.

10. The electronic device of any one of Claims 6 to 9, wherein the display module (413) is further configured to display, if the change in the first contact point is detected while first image data acquired by an image acquiring module (109) is displayed on the display screen (110), second image data related to first image data based on the first standard, and to display, if the changes in the positions of the second contact points are detected while the first image data is displayed on the display screen (110), third image data related to the first image data based on the second standard.

11. A program causing a computer to perform:
detecting at least one contact point on a display screen (110); and
displaying, if a change in a position of a first contact point on the display screen (110) is detected while first content (601) is displayed on the display screen (110), second content (711, 712) related to the first content based on a first standard, and displaying, if changes in positions of at least two second contact points on the display screen (110) is detected while the first content is displayed on the display screen, third content (1011, 1012, 1013, 1014) related to the first content (601) based on a second standard, a number of the first contact point differing from a number of the second contact points.

12. The program of Claim 11, wherein
the change in the position of the first contact point and the changes in the positions of the second contact points are detected by reverse of moving directions of the first contact point and the second contact points in a first axial direction on the display screen (110), and
each track of movement of the second contact points has a shape corresponding to each other.

13. The program of Claim 11 or 12, wherein at least one of the first standard and the second standard defines at least one of a temporal relation between creation time of the first content (601) and creation time of the second content or the third content, a geographical relation between a creation point of the first content (601) and a creation point of the second content or the third content, and a relation between a subject of the first content (601) and the subject of a second content or the third content.

14. The program of Claims 11 to 13, further causing the computer to perform:
acquiring first information detected by a sensor (115) ; and
displaying the second content in accordance with both the first standard and the first information, and displaying, if the change in the positions of the second points are detected, the third content in accordance with both the second standard and the first information.

15. The program of Claims 11 to 14, further causing the computer to perform:
displaying, if the change in the first contact point is detected while first image data acquired by an image acquiring module (109) is displayed on the display screen (110), second image data related to first image data based on the first standard, and displaying, if the changes in the positions of the second contact points are detected while the first image data is displayed on the display screen, third image data related to the first image data based on the second standard.
